# EUROPÄISCHE PATENTANMELDUNG

(11) **EP 1 267 553 A1**
(43) Veröffentlichungstag der Anmeldung: **18.12.2002**
(21) Anmeldenummer: 02100520.2
(22) Anmeldetag: 21.05.2002
(51) Int. Cl.: H04L 29/12, H04L 29/06

(54) **Verfahren und Vorrichtung zur Datenübertragung**

(30) Priorität: 06.06.2001 DE 10127361
(71) Anmelder: Siemens Aktiengesellschaft, 80339 München (DE)
(72) Erfinder: Laumen, Josef, 31141 Hildesheim (DE); Van Niekerk, Susanne, 38228 Salzgitter (DE)

(57) **Zusammenfassung**

Die vorliegende Erfindung betrifft ein Verfahren zur Datenübertragung nach dem Oberbegriff von Anspruch 1, eine dementsprechende Vorrichtung, eine Sende- und/oder Empfangseinheit und ein Kommunikationssystem.

Um ein Verfahren, eine Vorrichtung eine Sende- und/oder Empfangseinheit und ein Kommunikationssystem vorzuschlagen, die bei einem höheren Grad von Flexibilität zur Anpassung an verschiedene Standards innerhalb der Kommunikation einen verbesserten Komfort für einen jeweiligen Anwender schaffen, wird vorgeschlagen, daß eine IP-Adresse eines jeweiligen Benutzers als organisatorische Daten in einem Speichermittel gespeichert und im Bedarfsfall automatisch geladen wird.

## Beschreibung

Die vorliegende Erfindung betrifft ein Verfahren zur Datenübertragung nach dem Oberbegriff von Anspruch 1, eine dementsprechende Vorrichtung, eine Sende- und/oder Empfangseinheit und ein Kommunikationssystem.

Es ist bekannt, daß zum Aufbau und/oder zur Aufrechterhaltung eines Kommunikationsweges zur Übertragung von Daten eines beliebigen Formats und Inhalts von einem, über oder an ein Teilnehmer-Endgerät organisatorische Daten verarbeitet werden müssen. In der Datenübertragung wird immer stärker auf eine Vereinigung von mobiler Kommunikation in Wort und jeder sonstigen Form von Daten nach allen Standards hingewirkt, um u.a. auch Multimedianachrichten MM über einen Multimedia Messaging Service MMS übertragen zu können. Mobilfunkgeräten wird dementsprechend neben ihrer mobilen Sprachübertragung auch ein Internet-Zugang gegeben. In einem Kommunikationssystem wie dem Internet hat jeder Host und jeder Router seine eigene Adresse nach dem Internet-Protokoll, die s.g. IP-Adresse, die nun zusätzlich zu den bekannten Kennungen einer Mobilfunkverbindung verarbeitet und/oder verwaltet werden muß. In der IP-Adresse sind eine Netzwerk-Nummer und eine Host-Nummer codiert enthalten. Eine jeweilige Kombination ist als IP-Adresse einzigartig bzw. eineindeutig. Das heißt, daß keine zwei Hosts oder Router existieren können, die die gleiche IP-Adresse haben.

In dem Standard nach IPv4, IP version 4, besteht die IP-Adresse aus einem 32bit bzw. 4octet Adressenfeld. Diese Adresse kann in zwei Teile eingeteilt werden:
- Einen Netzwerk-Teil, der das Netzwerk bezeichnet, zum dem der Host gehört und
- Einen Host-Teil, der den Host selber identifiziert.

Hosts, die an dem selben Netzwerk angeschlossen sind, müssen den selben Teil zur Kennzeichnung des Netzwerks aufweisen, sich aber durch unterschiedliche Bits in dem jeweiligen Host-Teil ihrer Adresse unterscheiden. IP Adressen werden üblicherweise in dezimaler Notation mit Unterteilung durch Punkte geschrieben. Der dezimale Wert jedes der vier Octets ist nachfolgend mit trennenden Punkten angegeben. Als Beispiel wird die 32 bit IP-Adresse in binärer Darstellung 11000011.00100010.00001100.00000111 nachfolgend in der Dezimaldarstellung als 195.34.12.7 geschrieben. Es ist selbstverständlich, daß bei der stetig steigenden Anzahl von Internet-Nutzern eine IP- Adresse mit einer Länge von nur 32 bit nicht ausreicht, um jedem Teilnehmer eine eigene individuelle Kennung zuweisen zu können.

Nach dem IPv6 Standard, also IP version 6, werden IP-Adressen die vierfache Länge einer 32bit IPv4 Adresse umfassen, nämlich 128 Bit. Damit wird es in naher Zukunft für eine gewisse Zeitdauer möglich sein, bei der Nutzung des IP-Protokolls für mobile Kommunikation jedem mobilen Benutzer oder Anwender eine eigene IP-Adresse zuzuweisen, die einzigartig und eineindeutig ist.

Nachteilig bleibt aber auch dann, daß ein Anwender auf eine Vielzahl von unterschiedlichen Kommunikationsmitteln angewiesen sein wird, die jeweils eigene Arten der Kennung und/oder Identifizierung erfordern. Eine Möglichkeit für einen einfachen oder gar automatischen Wechsel von Kommunikationsmitteln ist derzeit nicht erkennbar.

Der vorliegenden Erfindung liegt die Aufgabe zugrunde, ein Verfahren und eine Vorrichtung vorzuschlagen, die bei einem höheren Grad von Flexibilität zur Anpassung an verschiedene Standards innerhalb der Kommunikation einen verbesserten Komfort für einen jeweiligen Anwender schafft.

Diese Aufgabe wird erfindungsgemäß durch ein Verfahren mit den Merkmalen des Anspruchs 1 und eine Vorrichtung mit den Merkmalen des Anspruchs 9 gelöst. Ferner sind eine Sendeund/oder Empfangseinheit mit den Merkmalen von Anspruch 12 und ein Kommunikationssystem mit den Merkmalen von Anspruch 14 jeweils Lösungen dieser Aufgabe. Die Unteransprüche definieren jeweils bevorzugte und vorteilhafte Ausführungsformen der vorliegenden Erfindung.

Ein erfindungsgemäßes Verfahren zur Datenübertragung umfaßt den Vorgang einer Speicherung einer eigenen IP-Adresse für einen jeweiligen Anwender als organisatorische Daten, so daß die IP-Adresse im Bedarfsfall automatisch geladen werden kann. Gemäß der vorliegenden Erfindung wird in einer Weiterbildung vorgeschlagen, die IP-Adresse eines Benutzers nicht auf irgendeiner Art von Speichermittel, sondern auf einer intelligenten Speicherkarte abgelegt wird. Eine Wechsel eines Kommunikationsgerätes oder Teilnehmer-Endgerätes kann damit erfindungsgemäß in sehr einfacher Weise vollzogen werden, indem einfach die Speicherkarte gewechselt bzw. dem einen Teilnehmer-Endgerät entnommen und in das andere Teilnehmer-Endgerät eingeführt wird.

Vorteilhafterweise ist als eine intelligente Speicherkarte eine Smart Card wie eine Subscriber Identity Module bzw. SIM Karte oder eine UMTS-Subscriber Identity Module- bzw. USIM-Anwendung vorgesehen. Diese Speicher sind per Definition dafür vorgesehen, in ein mobiles Telefon hineingesteckt zu werden. Derartige Karten sind an sich bekannt, wobei jedoch derzeit für eine eigene IP-Adresse keine Speichermöglichkeit auf einem SIM oder einem USIM auf dem UICC oder irgendeinem anderen Medium vorgesehen ist.

Ein Vorteil dieses Vorschlags liegt darin, daß die IP-Adresse in gleichbleibender Weise für einen Anwender unabhängig davon zur Verfügung steht, welches Teilnehmer-Endgerät oder welchen physikalischen Zugang er zur Kommunikation wählt. Damit ist ein physikalischer Zugang erfindungsgemäß frei wählbar geworden, d.h. ein Anwender kann mit nur einer intelligenten Speicherkarte eines bereits erprobten und weit verbreiteten Formats jedes Mobiltelefon auch mit jeder denkbaren computer-ähnlichen Erweiterung nutzen. Ein weiterer Vorteil besteht darin, daß eine SIM oder UICC immer in jedem einzelnen GSM oder UMTS Telefon verfügbar ist. Das heißt, daß gemäß vorliegender Erfindung sichergestellt wird, daß ein zum Abspeichern einer IP-Adresse genutztes Datenformat und ein Mechanismus zum Abrufen dieser Daten von jedem einzelnen IP-fähigen GSModer UMTS-Telefon unabhängig von einem jeweiligen Hersteller verstanden wird, da die Datenformate und Abrufbedingungen für die SIM und USIM/UICC standardisiert und bereits in Geräten vorhanden sind.

Nach dem GSM-Standard werden die erfindungsgemäß vorgesehenen intelligenten Speicherkarten Subscriber Identity Module SIM genannt, im UMTS wird dagegen zwischen der physikalisch vorhandenen Karte, die Universal IC Card UICC genannt wird, und ihrer UMTS-Subscriber Identity Module USIM genannten logischen Funktion unterschieden. Erfindungsgemäß wird eine IP-Adresse also in einer SIM-Karte oder in der USIM-Applikation auf einer UICC-Karte gespeichert. Mobile Kommunikationsdienste nach der zweiten Generation, wie beispielsweise nach dem Global System for Mobile Communication Standard GSM und der dritten Generation, wie beispielsweise nach dem Universal Mobile Telecommunication Service Standard UMTS verwenden zusätzlich zu den Mobiltelefonen selber genau spezifizierte Smart Cards. In ein Mobiltelefon eingeschoben befähigen diese Smart Cards einen Anwender zur Benutzung eines Kommunikationsdienstes, bei dem er angemeldet ist. Darüber hinaus können bereits heute Vorlieben eines Benutzers und Einstellungen wie auch persönliche Informationen über den Benutzer auf einer solchen Smart Card gespeichert werden. Insofern wird erfindungsgemäß eine bereits vorhandene Infrastruktur von Teilnehmer-Endgeräten genutzt und der Funktionsumfang an sich bekannter intelligenter Speicherkarten vorteilhaft dahingehend erweitert, daß nun ein beliebiger Wechsel der Teilnehmer-Endgeräte für einen jeweiligen Anwender gerätetypen- und herstellerunabhängig erfolgen kann.

Weitere Vorteile und Merkmale der Erfindung ergeben sich aus dem in der Zeichnung dargestellten und nachfolgend beschriebenen Ausführungsbeispiel der Erfindung.

In der Zeichnung zeigt:
- Fig. 1: eine schematische Abbildung der Organisation eines Speichers;
- Fig. 2: eine Darstellung einer Speicherstruktur für Speichern einer IP-Adresse auf einem USIM und
- Fig. 3: ein Beispiel einer Elementardatei EF_{IPS} zur Speicherung einer IP-Adresse eines eingeschriebenen Anwenders.

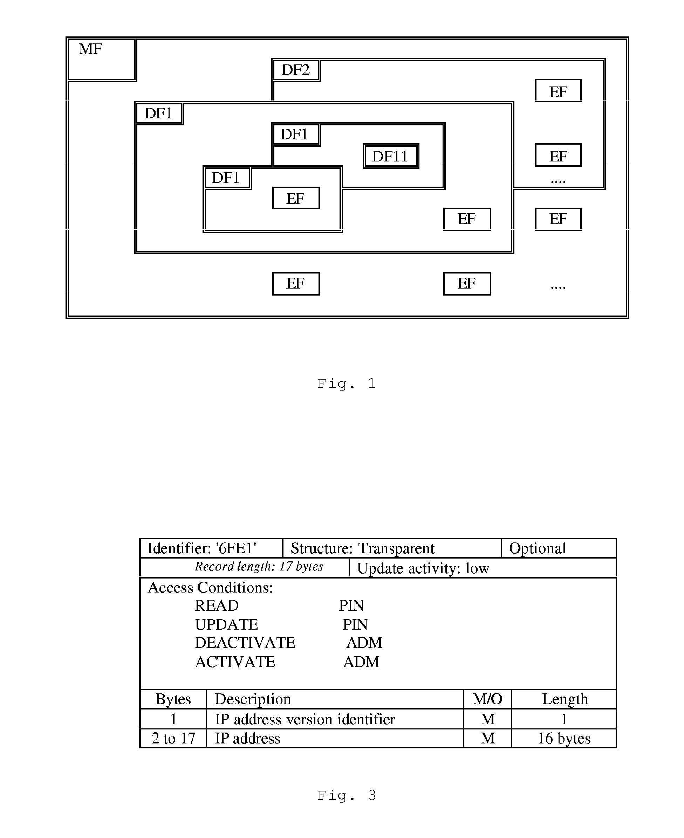

Elemente und Felder mit gleicher Funktion und Wirkungsweise sind in den Figuren 1 bis 3 jeweils mit denselben Bezugszeichen bzw. Abkürzungen versehen.

Zum Abspeichern verschiedener Informationen ist der Speicher einer intelligenten Speicherkarte in einer hierarchischen Struktur organisiert, die in Fig. 1 dargestellt ist. Es sind darin drei verschiedene Typen von Dateien vorhanden, nämlich eine Hauptdatei bzw. Master file MS, gewidmete bzw. reservierte Dateien bzw. Dedicated files DS und Elementardateien bzw. Elementary files EF. Diese Dateien können entweder organisations- oder anwendungsspezifisch sein. Ein Betriebssystem organisiert den Zugang zu den in den verschiedenen Dateien gespeicherten Daten. Hierin sich auch in an sich bekannter Weise Sicherheitsschranke und Zugangsbeschränkungen bei der Datenauswertung und/oder Änderung der gespeicherten Daten vorgesehen. Insbesondere erfolgt eine Datenfreigabe erst nach Eingabe einer korrekten Personal identification number PIN.

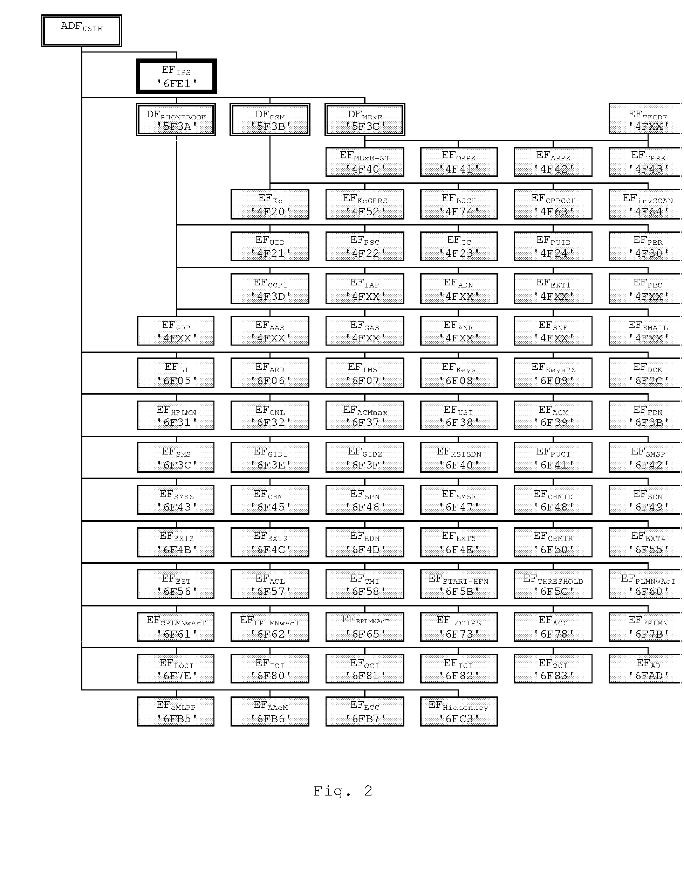

In dem Fall des Speicherns einer IP-Adresse in einer SIM Karte oder in der USIM-Applikation auf einer UICC-Karte kann die IP-Adresse in einer Elementardatei EF abgespeichert werden. In der Abbildung von Fig. 2 ist die Speicherung einer IP-Adresse in einer UTMS-USIM dargestellt. Eine Elementardatei der USIM ist für die IP-Adresse reserviert. Nach einer internen Struktur wird auf die betreffende EF-Zelle nur anwendungsspezifisch bzw. task-orientiert zugegriffen, also nur im Fall des Aufbaus oder einer sonstigen Organisation eines Internet-Zugangs.

Die Abbildung von Fig. 3 zeigt ein Beispiel einer Elementardatei EF_{IPS} der USIM zur Speicherung einer IP-Adresse, also der IP-Adresse eines eingeschriebenen Anwenders. In der Elementardatei EF_{IPS} enthalten sind ein Anzeiger für die Version der IP-Adresse, IP-address version identifier. Der Anzeiger für die Version der IP-Adresse beinhaltet die Information darüber, ob eine IP-Adresse nach der IP-Version 4 oder der IP-Version 6 benutzt wird. Die Codierung des betreffenden Versions-Feldes erfolgt in diesem Ausführungsbeispiel als
00 : IP version 4
01 : IP version 6

Ferner ist die IP-Adresse des eingeschriebenen Anwenders in der Elementardatei EF_{IPS} enthalten. Dabei ist die IP-Adresse hexadezimal codiert. Wie in Fig. 3 dargestellt sind die Angaben der IP-Adressen-Version und der IP-Adresse mit M für mandantory zwingend vorgeschrieben.

Auch im Fall einer dynamischen Vergabe einer IP-Adresse für eine jeweilige Internet-Sitzung etc. können die notwendigen Informationen in gering abgewandelter Weise erfindungsgemäß in der Speicherkarte personenbezogen und sicher abgelegt werden.

Da die Speicherkarte nach einem standardisierten Format ausgebildet ist, ist sie in möglichst allen üblichen mobilen Teilnehmer-Endgeräten unmittelbar einsetzbar. Sie kann damit notfalls unter Verwendung bekannter Adapterelemente in einer Einrichtung mindestens teilweise aufgenommen werden, in der sie ausgelesen und/oder beschrieben wird, also in einem Kartenleser. Dieser Kartenleser wird vorzugsweise jedoch erfindungsgemäß so ausgebildet, daß einerseits eine dauerhafte und beschützte Verwahrung bei sicherem Schreib-/Lesevorgängen garantiert ist, andererseits ein Wechsel oder eine befugte Entnahme der Speicherkarte in einfacher Weise schnell und unproblematisch möglich ist.

Weitere Hintergrundangaben finden sich insbesondere an folgenden Stellen:
- [1]: 3GPP TS 31.102 V3.3.0 (Release 1999), Characteristics of the USIM Application.
- [2]: 3GPP TS 11.11 V8.4.0 (Release 1999), Specification of the Subscriber Identity Module-Mobile Equipment (SIM-ME) Interface.
- [3]: 3GPP TS 31.101 V3.3.0, UICC-Terminal Interface; Physical and Logical Characteristics.
- [4]: ETSI TS 102.221 V3.0.0, UICC-Terminal Interface; Physical and Logical Characteristics.
- [5]: W. Rankl, W. Effing, Smartcard Handbook, John Wiley & Sons, second edition, 2000.
- [6]: Wolfgang Rankl, Wolfgang Effing, Handbuch der Chipkarten, Carl Hanser Verlag, 3. Auflage, 1999.
- [7]: Douglas E. Comer, Internetworking with TCP/IP, Volume 1: Principles, protocols, and architecture.

## Patentansprüche

1. Verfahren zur Datenübertragung, bei dem zum Aufbau und/oder zur Aufrechterhaltung eines Kommunikationsweges zur Datenübertragung über ein Teilnehmer-Endgerät organisatorische Daten verarbeitet werden,
**dadurch gekennzeichnet,**
**daß** eine IP-Adresse eines jeweiligen Benutzers als organisatorische Daten in einem Speichermittel gespeichert und im Bedarfsfall automatisch geladen wird.

2. Verfahren nach Anspruch 1,
**dadurch gekennzeichnet,**
**daß** als Speichermittel eine intelligente Speicherkarte verwendet wird.

3. Verfahren nach einem der beiden vorhergehenden Ansprüche,
**dadurch gekennzeichnet,**
**daß** die IP-Adresse eines jeweiligen Benutzers in einem SIM, USIM oder UICC als einem intelligenten Speicher abgelegt wird.

4. Verfahren nach einem der vorhergehenden Ansprüche,
**dadurch gekennzeichnet,**
**daß** die Speicherung der IP-Adresse in einem strukturierten Speicher stattfindet.

5. Verfahren nach dem vorhergehenden Anspruch,
**dadurch gekennzeichnet,**
**daß** die Speicherung der IP-Adresse in einer Elementardatei (EF) des strukturierten Speichers vorgenommen wird.

6. Verfahren nach einem der vorhergehenden Ansprüche,
**dadurch gekennzeichnet,**
**daß** in dem Speicher eine Abfrage einer Zugangsbedingung vorgenommen wird bevor die IP-Adresse und/oder andere Daten zum Auslesen freigegeben und/oder verändert werden, insbesondere überschrieben.

7. Verfahren nach einem der vorhergehenden Ansprüche,
**dadurch gekennzeichnet,**
**daß** die IP-Adresse zusammen mit einem Versions-Feld zur Codierung einer eingesetzten IP-Adressen-Version abgelegt wird.

8. Verfahren nach einem der vorhergehenden Ansprüche,
**dadurch gekennzeichnet,**
**daß** in dem Speicher Dateien (EF) zum Ablegen von weiteren Zugangsdaten erzeugt werden, insbesondere von Zugangsdaten weiterer Kommunikationssysteme.

9. Vorrichtung zum Speichern von Daten, insbesondere zur Umsetzung eines Verfahrens nach einem der vorhergehenden Ansprüche,
**dadurch gekennzeichnet,**
**daß** die Vorrichtung als intelligente Speicherkarte ausgeführt ist.

10. Vorrichtung nach dem vorhergehenden Anspruch,
**dadurch gekennzeichnet,**
**daß** die Speicherkarte nach einem standardisierten Format ausgebildet ist, das insbesondere in möglichst allen üblichen mobilen Teilnehmer-Endgeräten einsetzbar ist.

11. Vorrichtung nach einem der beiden vorhergehenden Ansprüche,
**dadurch gekennzeichnet,**
**daß** die Speicherkarte als SIM- oder als UICC-Karte ausgebildet ist.

12. Sende- und/oder Empfangseinheit, insbesondere zur Umsetzung eines Verfahrens nach einem der vorhergehenden Ansprüche,
**dadurch gekennzeichnet,**
**daß** eine Einrichtung zur mindestens teilweisen Aufnahme einer intelligenten Speicherkarte zum Auslesen und/oder Beschreiben vorgesehen ist.

13. Sende- und/oder Empfangseinheit nach dem vorhergehenden Anspruch,
**dadurch gekennzeichnet,**
**daß** sie als Mobiltelefon nach dem GSM- und/oder UMTS-Standard ausgebildet ist.

14. Kommunikationssystem zur Übertragung von Daten eines beliebigen Formats und Inhalts von einem, über oder an ein Teilnehmer-Endgerät,
**dadurch gekennzeichnet,**
**daß** es zur Umsetzung eines Verfahrens gemäß einem der Ansprüche 1 bis 8 ausgebildet und/oder
mit einer Vorrichtung gemäß einem der Ansprüche 9 bis 11 und/oder
mit einer Sende- und/oder Empfangseinheit nach einem der Ansprüche 12 bis 13 aufgebaut ist.
